# EUROPEAN PATENT SPECIFICATION

(11) **EP 1 273 464 B1**
(45) Date of publication and mention of the grant of the patent: **26.10.2005**
(21) Application number: 02077599.5
(22) Date of filing: 01.07.2002
(51) Int. Cl.: B60G 9/00, B60G 11/113, B60G 11/46

(54) **Connection between an axle beam of a wheel axle of a vehicle and a bearing arm supporting the wheel axle**
Verbindung zwischen einer starren Radachse eines Fahrzeugs und einem die Radachse tragenden Tragarm
Connexion entre un essieu rigide de roue de véhicule et un bras de suspension portant l' essieu de roue

(30) Priority: 02.07.2001 NL 1018435
(43) Date of publication of application: 08.01.2003
(73) Proprietor: WEWELER NEDERLAND B.V., 7332 AP Apeldoorn (NL)
(72) Inventor: Aalderink, Derk Geert, 7245 NV Laren (NL)
(74) Representative: Iemenschot, Johannes Andreas

(56) References cited:
- EP-A- 0 590 528
- EP-A- 0 618 095
- EP-A- 0 810 109
- EP-A- 1 052 123
- EP-A- 1 088 687
- GB-A- 2 126 539
- US-A- 3 061 301
- US-A- 3 751 021
- US-A- 3 913 937
- US-A- 5 362 095
- PATENT ABSTRACTS OF JAPAN vol. 004, no. 132 (M-032), 17 September 1980 (1980-09-17) & JP 55 087606 A (NHK SPRING CO LTD;OTHERS: 01), 2 July 1980 (1980-07-02)

## Description

The present invention relates to a connection between an axle beam of a wheel axle of a vehicle and a bearing arm of the wheel axle extending in the longitudinal direction of the vehicle and intersecting the axle beam substantially at right angles, according to the preamble of claim 1.

Such a connection is known in many embodiments, for example from EP-A-0830957, for an axle beam of circular cross section, and from EP-A-0590528, for an axle beam of square cross section. In order to create sufficient space for a brake system, for example, the axle beam is usually fitted on the underside of the bearing arm. However, this increases the ride height of the vehicle, i.e. the distance between the underside of the chassis of the vehicle and the axle beam, since part of the space between the axle beam and the underside of the chassis is taken up by the bearing arm, and the space then remaining between the bearing arm and the underside of the chassis has to be sufficient to provide a spring travel for the wheel axle. If, in addition, as in the case of the known connections, the supporting plate is of a fairly heavy design and parts of the clamping means project above the bearing arm, so that these parts take up a relatively large amount of space on the top side of the bearing arm, the ride height is increased even further.

The object of the invention is to provide a connection of the abovementioned type in the case of which with an axle beam fitted underneath the bearing arm the ride height of the vehicle is not much greater than with the axle beam fitted on the top side of the bearing arm.

This object is achieved according to the invention by a connection according to claim 1.

The connection according to the invention is very stable and can be designed in such a way that the parts of the connection are relatively light and project as little as possible above the bearing arm, so that the ride height of the vehicle can remain limited.

Preferred embodiments of the connection according to the invention are described in the subclaims.

The invention will be explained in greater detail in the exemplary embodiment below with reference to the drawing, in which:
Fig. 1 shows an air spring system for a wheel axle of a vehicle, in which a specific embodiment of the connection according to the invention is to be used;
Fig. 2 shows on an enlarged scale a slightly modified embodiment of a connection according to the invention;
Fig. 3 shows a top view of the connection of Fig. 2;
Fig. 4 shows a side view of the connection of Fig. 2;
Fig. 5 shows a detail V of Fig. 4 on an enlarged scale;
Fig. 6 shows in an illustration corresponding to Fig. 5 a slightly different embodiment of the connection according to the invention; and
Fig. 7 shows yet another embodiment of a connection according to the invention.

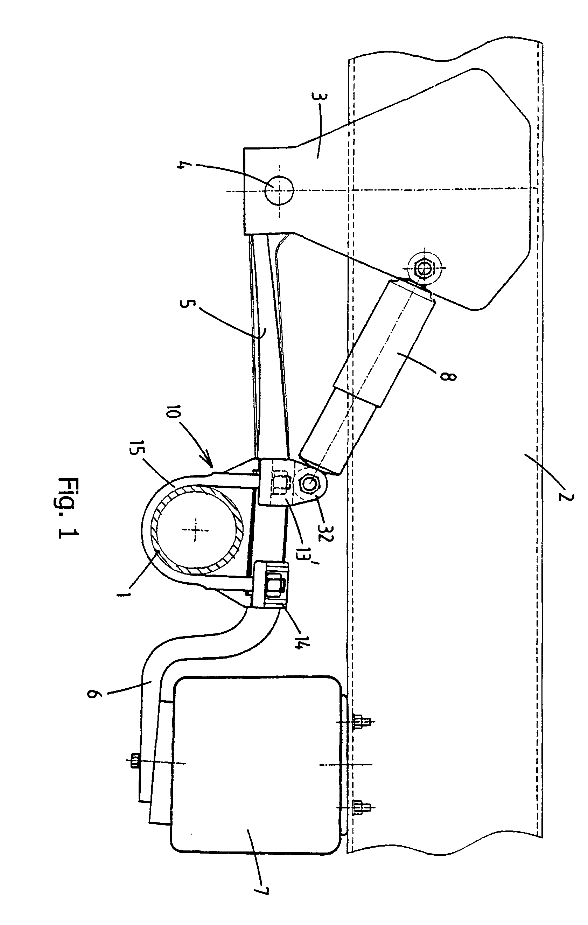

Fig. 1 shows an air spring system for a wheel axle of a vehicle, in which the connection between the axle beam of circular cross section of the wheel axle and the bearing arm of the wheel axle is designed according to the invention.

In Fig. 1 the axle beam of the wheel axle is indicated by reference numeral 1. The air spring system illustrated comprises a bearing bracket 3 fixed on a chassis beam 2 of a vehicle, a bearing arm 5 fixed at the position of a fixing point 4 in a pivoting manner on the bearing bracket 3, an air bellows 7 fitted between the free end part of the bearing arm 5 that is situated at a distance from the fixing point 4 and the chassis beam, and a shock absorber 8 fitted between the bearing bracket 3 and the bearing arm 5. The bearing arm 5 intersects the axle beam 1 substantially at right angles. The axle beam 1 is fitted on the underside of the bearing arm and connected to the bearing arm 5 by means of a connection according to the invention to be described in further detail below, which connection is indicated in its entirety by reference numeral 10.

The advantage of fitting the axle beam on the underside of the bearing arm 5 is that space is created for fitting a brake system, for example, on the axle beam. However, the invention is not limited to a system in which the axle beam is fitted on the underside of the bearing arm.

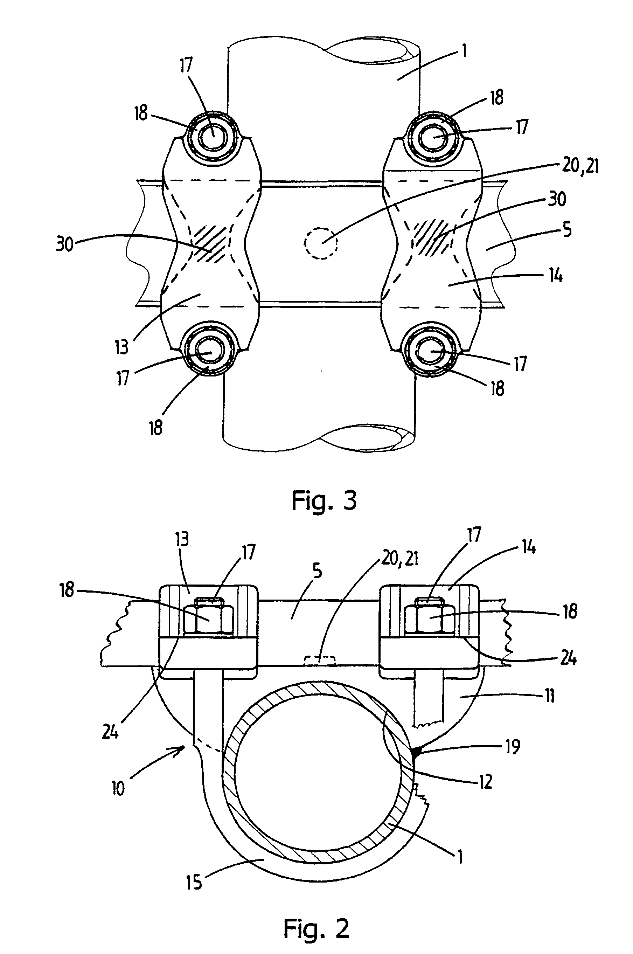

In the embodiments shown in Figs. 2 to 6 the connection 10 comprises an intermediate block (axle pad) 11 between the axle beam 1 and the bearing arm 5, which intermediate block is provided with a recess 12 in which the axle beam 1 rests, and is provided with two supporting plates 13 and 14, which are fitted on the bearing arm on the side of the bearing arm 5 facing away from the axle beam 1.

The connection 10 further comprises clamping elements in the form of two substantially U-shaped brackets 15 and 16, the free end parts 17 of which are provided with screw thread. The free end parts 17 of the U-shaped brackets 15 and 16 project through bores in the supporting plates 13 and 14 and are provided with nuts 18. The supporting plates 13 and 14, the bearing arm 5, the intermediate block 11 and the axle beam 1 are immovably connected to each other by means of the U-shaped brackets 15 and 16 with nuts 18.

The intermediate block 11 can be connected to the axle beam 1 by means of a welded connection 19, in order to prevent the axle beam 1 from starting to rotate relative to the intermediate block. At the side resting against the bearing arm 5, the intermediate block is further provided with a lug 20, which slots into a recess 21 in the bearing arm 5. In this way the intermediate block 11 is always positioned correctly relative to the bearing arm 5. The positioning of the intermediate block 11 relative to the bearing arm 5 can, however, also be achieved in a different way.

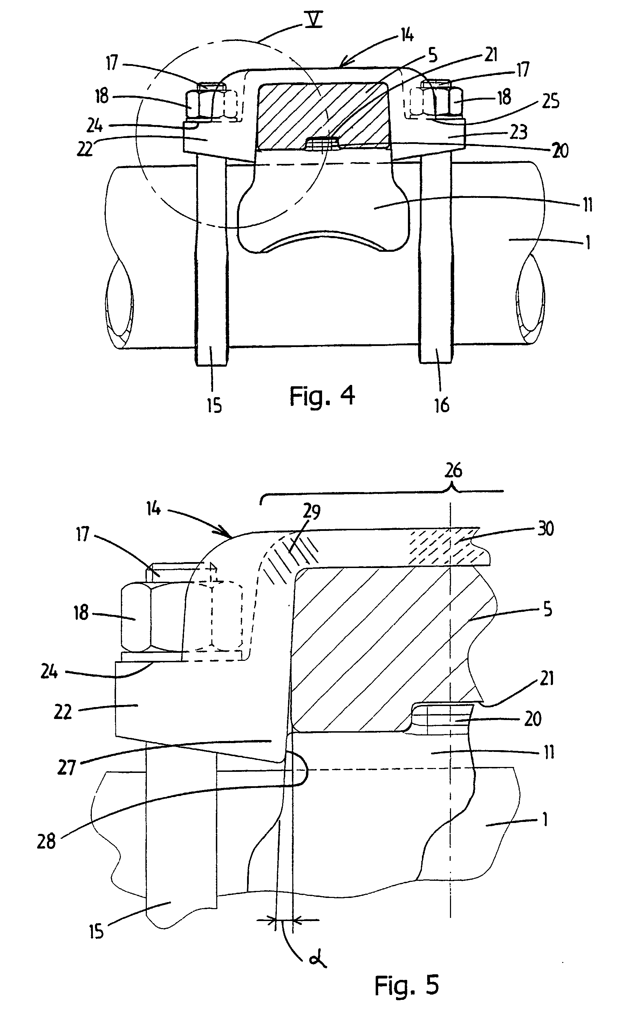

As can be seen clearly in Figs. 4 - 6, each of the two supporting plates 13 and 14 can be provided with clamping portions 22 and 23, which extend on either side next to the bearing arm 5, and which are each provided with holes drilled through them, through which the free end parts 17 of the U-shaped brackets 15 and 16 extend. The clamping portions 22 and 23 are provided with supporting faces 24 and 25 for the nuts 18. These supporting faces 24 and 25 lie at a level that is such that the free end parts 17 with the nuts 18 of the U-shaped brackets 15 and 16 do not extend above the top side of the supporting plates 13 and 14. This means that the nuts 18 lie at a low level, and the space between the bearing arm and the chassis beam situated above the bearing arm can be used in the optimum manner as a spring path for the wheel axle.

The part 26 of each supporting plate 13, 14 between the clamping portions 22, 23 is slightly deformable. When the nuts 18 have been tightened, the clamping portions 22, 23 rest with their free ends 27 on the side faces 28 of the intermediate block 11. Through the deformability of the part 26, said clamping portions 22, 23 can be clamped firmly on the intermediate block 11 with a limited tightening moment of the nuts 18.

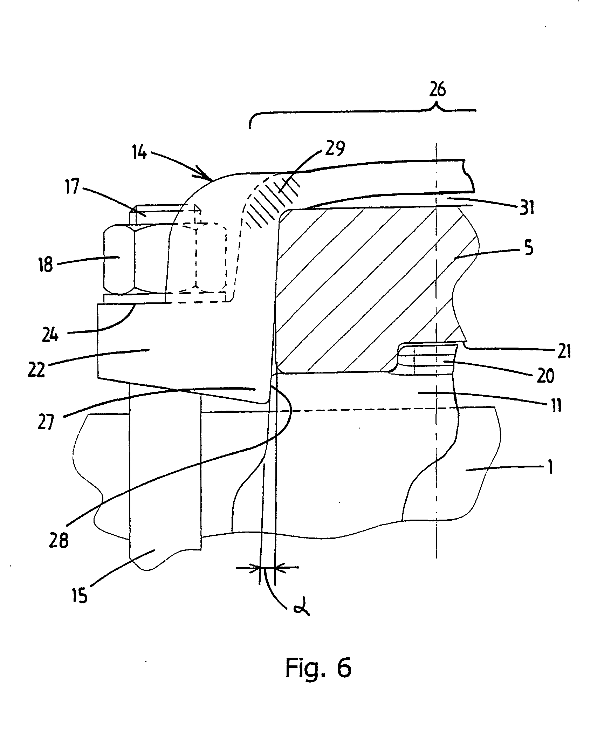

The deformability of the part 26 can be achieved (see Figs. 3, 5 and 6) by making a transitional part 29 between the clamping portions 22, 23 and the remainder of the supporting plate 13, 14 slightly flexible and/or by making the part 26 slightly extensible. The latter is possible by providing the part 26 with a narrowed part 30 (Figs. 3 and 5) or by making the part 26 a curved shape (Fig. 6), so that a space 31 is created between the part 26 and the bearing arm 5.

In order to minimize the influence of tolerances, the bearing arm 5 and the supporting plates 13 and 14 can be calibrated. The side faces of the bearing arm 5 are then preferably bevelled at least over a part situated at the side of the supporting plate 13, 14, in order to be able to calibrate the width of the bearing arm 5 in a simple manner (see Figs. 5 and 6). The angle of bevel (clearance angle) α can be relatively small (a few degrees). The height of the bevelled part is preferably 1/3 - 1/2 of the height of the bearing arm 5.

The shape of the faces of the clamping portions 22, 23 of the supporting plates 13, 14 interacting with the bearing arm 5 is preferably adapted to the shape of the bearing arm 5.

It is also possible to calibrate a bearing arm 5 with non-bevelled side faces. The side faces of the bearing arm 5 will then usually be subjected to a machining operation, such as grinding.

The embodiment of the connection according to the invention described above comprises two supporting plates 13, 14, which are situated in the longitudinal direction of the bearing arm 5 on either side of the axle beam 1, and which are each provided with two clamping portions 22, 23 extending on either side next to the bearing arm 5.

Another embodiment of the connection (not shown here) comprises a single supporting plate that is provided with two or four clamping portions situated in pairs in the longitudinal direction of the bearing arm 5 on either side of the axle beam 1, and extending in pairs on either side of the bearing arm 5.

The connection according to the invention described above can also be used in a slightly adapted embodiment for an axle beam with a substantially rectangular or square cross section.

As shown in Fig. 1, the shock absorber 8 can be fixed to a supporting plate 13' by means of an additional bracket 32 on the supporting plate 13'. This additional bracket 32 is preferably asymmetrical relative to the longitudinal axis of the bearing arm 5, in other words fitted largely next to the bearing arm 5, so that when the bearing arm 5 moves upwards the additional bracket 32 does not go against the underside of the chassis beam 2, which would destroy the effect of the special design of the connection.

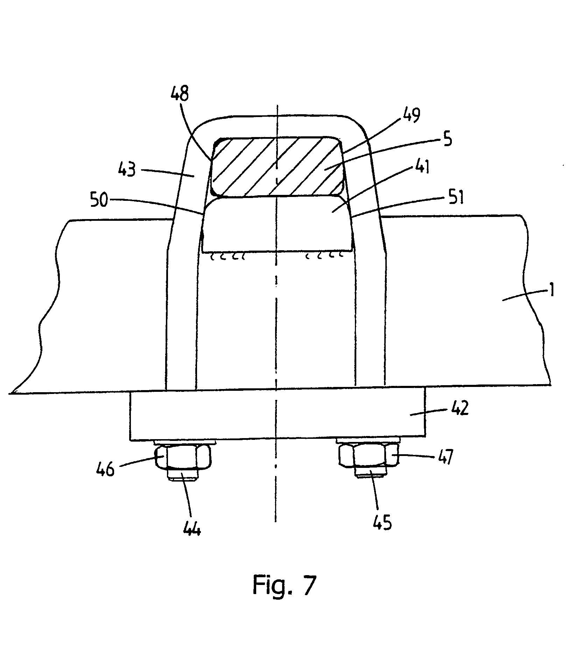

Another embodiment of a connection according to the invention is shown in Fig. 7. In Fig. 7 the axle beam 1 has a substantially rectangular or square cross section.

The connection between the axle beam 1 and the bearing arm 5 comprises an intermediate block (axle pad) 41 fitted between the axle beam 1 and the bearing arm, which intermediate block is provided with a recess in which the axle beam 1 rests, a supporting plate 42 that is fitted on the side facing away from the bearing arm 5 for the axle beam 1, and clamping elements in the form of two substantially U-shaped brackets 43 (only one visible in Fig. 7), which are fitted around the bearing arm 5 on either side of the axle beam 1. The free end parts 44 and 45 of the U-shaped brackets 43 project through bores in the supporting plate 42 and are provided with nuts 46 and 47.

The U-shaped brackets form clamping portions which interact in a clamping manner with at least a part of the side faces 48 and 49 of the bearing arm 5 and at least a part of the side faces 50 and 51 of the intermediate block 41. The side faces 48, 49, 50 and 51 are preferably slightly bevelled, the shape of the U-shaped brackets 43 being adapted to them.

With a slightly adapted shape of the intermediate block and the supporting plate, the connection shown in Fig. 7 can also be used in the case of an axle beam with a circular cross section.

In the above description the connection according to the invention is used in the case of an axle beam mounted on the underside of the bearing arm. The connection can, however, also be used in the case of an axle beam mounted on the top side of the bearing arm.

## Claims

1. Connection between an axle beam (1) of a wheel axle of a vehicle and a bearing arm (5) of the wheel axle extending in the longitudinal direction of the vehicle and intersecting the axle beam substantially at right angles, said connection comprising:
firstly, an intermediate block (axle pad) (11; 41) fitted between the axle beam (1) and the bearing arm (5), which intermediate block (11; 41) is provided with a recess (12) in which the axle beam (1) rests, and
secondly, connecting means that comprise:
(a)at least one supporting plate (13; 14; 42) and
(b)clamping elements of the screw bolt type (15, 16, 18; 43, 46,47), which extend on either side of the bearing arm (5) and the axle beam (1) and through bores that are drilled through the supporting plate (13; 14), which connecting means connect the bearing arm (5), the intermediate block (11; 41) and the axle beam (1) immovably to each other, **characterized in that** the connecting means are provided with clamping portions (22, 23) situated on either side next to the bearing arm (5), each clamping portion (22, 23) interacting in a clamping manner with at least a part of a side face of the bearing arm (5) and at least a part of a side face of the intermediate block (11; 41).

2. Connection according to claim 1, in which the supporting plate (13; 14) is fitted on the bearing arm (5) on the side of the bearing arm facing away from the axle beam (1), and is provided with portions (22, 23) projecting beyond the bearing arm on either side, which projecting portions are designed as the clamping portions situated on either side next to the bearing arm, each clamping portion (22; 23) interacting in a clamping manner with the bearing arm (5) at least over a part of a side face of the bearing arm that is situated on the side of the supporting plate, and each clamping portion (22, 23) at the free end resting in a clamping manner on a side face of the intermediate block (11).

3. Connection according to claim 2, in which the part of the supporting plate (13; 14) between the clamping portions is at least partially slightly deformable.

4. Connection according to claim 2 or 3, in which the connection comprises two supporting plates (13; 14) situated in the longitudinal direction of the bearing arm (5) on either side of the axle beam (1), each supporting plate (13; 14) being provided with two clamping portions (22, 23) extending on either side next to the bearing arm (5).

5. Connection according to claim 2 or 3, in which the connection comprises one supporting plate that is provided with four clamping portions situated in the longitudinal direction of the bearing arm (5) in pairs on either side of the axle beam (1), and extending in pairs on either side of the bearing arm (5).

6. Connection according to one of claims 2 - 5, in which the clamping elements are composed of two substantially U-shaped brackets (15, 16), which are fitted around the axle beam (1) on either side of the bearing arm (5), and the free end parts (17) of which are provided with screw thread and extend through bores that are drilled through the clamping parts of the supporting plate(s), nuts (18) being screwed onto the parts of the free end parts of the brackets projecting beyond the supporting plate(s) (13, 14), which nuts rest upon supporting faces (25, 26) on the side of the clamping portions facing away from the axle beam, which supporting faces are situated at a level that is such that the free end parts with the nuts of the brackets are situated in the vertical direction below the level of the top side of the supporting plate(s).

7. Connection according to claim 1, in which the supporting plate (42) is fitted on the side of the axle beam (1) facing away from the bearing arm (5), and the clamping elements are composed of two substantially U-shaped brackets (43), which are fitted around the bearing arm on either side of the axle beam, and the free end parts (44, 45) of which are provided with screw thread and extend through the bores that are drilled through the supporting plate (42), nuts (46; 47) being screwed onto the parts of the free end parts of the brackets projecting beyond the supporting plate, which nuts rest upon supporting faces on the side of the supporting plate facing away from the axle beam, and the legs of the U-shaped brackets being designed as the clamping parts situated on either side of the bearing arm.

8. Connection according to one of claims 1 - 6, in which the side faces of the bearing arm are bevelled at least over a part of the height of the bearing arm (5) situated on the side of the supporting plate.

9. Connection according to claim 8, in which the side faces of the bearing arm are bevelled over approximately 1/3 - 1/2 of the height of the bearing arm.

## Patentansprüche

1. Verbindung zwischen einem Achskörper (1) einer Radachse eines Fahrzeugs und einem Lagerarm (5) der Radachse, der sich in der Längsrichtung des Fahrzeugs erstreckt und den Achskörper im Wesentlichen im rechten Winkel schneidet, wobei die Verbindung umfasst:
erstens, einen Zwischenblock (Achsablage) (11; 41), der zwischen den Achskörper (1) und den Lagerarm (5) eingesetzt ist, wobei der Zwischenblock (11; 41) mit einer Vertiefung (12) versehen ist, in der der Achskörper (1) aufliegt, und
zweitens, eine Verbindungseinrichtung, die umfasst:
(a) wenigstens eine Trageplatte (13; 14; 42) und
(b) Klemmelemente des Schraubenbolzen-Typs (15, 16, 18; 43, 46, 47), die sich auf beiden Seiten des Lagerarms (5) und des Achskörpers (1) erstrecken, und Durchgangsbohrungen, die durch die Trageplatte (13; 14) hindurchgebohrt sind, wobei die Verbindungseinrichtung den Lagerarm (5), den Zwischenblock (11; 41) und den Achskörper (1) unbeweglich miteinander verbindet, **dadurch gekennzeichnet, dass** die Verbindungseinrichtung mit Klemmabschnitten (22, 23) versehen ist, die sich auf beiden Seiten neben dem Lagerarm (5) befinden, wobei jeder Klemmabschnitt (22, 23) klemmend mit wenigstens einem Teil einer Seitenfläche des Lagerarms (5) und wenigstens einem Teil einer Seitenfläche des Zwischenblocks (11; 41) zusammenwirkt.

2. Verbindung nach Anspruch 1, wobei die Trageplatte (13; 14) an dem Lagerarm (5) an der Seite des Lagerarms angebracht ist, die von dem Achskörper (1) weggewandt ist, und mit Abschnitten (22, 23) versehen ist, die auf beiden Seiten über den Lagerarm hinaus vorstehen, wobei die vorstehenden Abschnitte als die Klemmabschnitte ausgeführt sind, die sich auf beiden Seiten neben dem Lagerarm befinden, und jeder Klemmabschnitt (22; 23) klemmend mit dem Lagerarm (5) wenigstens über einen Teil einer Seitenfläche des Lagerarms zusammenwirkt, der sich an der Seite der Trageplatte befindet, und jeder Klemmabschnitt (22, 23) an dem freien Ende klemmend an einer Seitenfläche des Zwischenblocks (11) aufliegt.

3. Verbindung nach Anspruch 2, wobei der Teil der Trageplatte (13; 14) zwischen den Klemmabschnitten wenigstens teilweise leicht verformt werden kann.

4. Verbindung nach Anspruch 2 oder 3, wobei die Verbindung zwei Trageplatten (13; 14) umfasst, die sich in der Längsrichtung des Lagerarms (5) auf beiden Seiten des Achskörpers (1) befinden, und jede Trageplatte (13; 14) mit zwei Klemmabschnitten (22, 23) versehen ist, die sich auf beiden Seiten neben dem/den Lagerarm/en (5) erstrecken.

5. Verbindung nach Anspruch 2 oder 3, wobei die Verbindung eine Trageplatte umfasst, die mit vier Klemmabschnitten versehen ist, die sich in der Längsrichtung des Lagerarms (5) paarweise auf beiden Seiten des Achskörpers (1) befinden und sich in Paaren auf beiden Seiten des/der Lagerarms/Lagerarme (5) erstrecken.

6. Verbindung nach einem der Ansprüche 2-5, wobei die Klemmelemente aus zwei im Wesentlichen U-förmigen Schellen (15, 16) bestehen, die auf beiden Seiten des Lagerarms (5) um den Achskörper (1) herum angebracht sind, und deren freie Endteile (17) mit Schraubengewinde versehen sind und sich durch Bohrungen hindurch erstrecken, die durch die Klemmteile der Trageplatte hindurchgebohrt sind, wobei Muttern (18) auf die Teile der freien Endteile der Schellen aufgeschraubt werden, die über die Trageplatten (13, 14) hinaus vorstehen, und die Muttern auf Trageflächen (25, 26) an der Seite der Klemmabschnitte aufliegen, die von dem Achskörper weggewandt sind, wobei sich die Trageflächen auf einer Höhe befinden, die so ist, dass sich die freien Endteile mit den Muttern der Schellen in der vertikalen Richtung unter der Höhe der Oberseite der Trageplatten befinden.

7. Verbindung nach Anspruch 1, wobei die Trageplatte (42) an der Seite des Achskörpers (1) angebracht ist, die von dem Lagerarm (5) weggewandt ist, und die Klemmelemente aus zwei im Wesentlichen U-förmigen Schellen (43) bestehen, die auf beiden Seiten des Achskörpers um den Lagerarm herum angebracht sind, und deren freie Endteile (44, 45) mit Schraubengewinde versehen sind und sich durch die Bohrungen hindurch erstrecken, die durch die Trageplatte (42) hindurch gebohrt sind, wobei Muttern (46; 47) auf die Teile der freien Endteile der Schellen aufgeschraubt sind, die über die Trageplatte hinaus vorstehen, und die Muttern auf Trageflächen an der Seite der Trageplatte aufliegen, die von dem Achskörper weggewandt ist, und die Schenkel der U-förmigen Schnellen als die Klemmteile ausgeführt sind, die sich an beiden Seiten des Lagerarms befinden.

8. Verbindung nach einem der Ansprüche 1-6, wobei die Seitenflächen des Tragearms wenigstens über einen Teil der Höhe des Lagerarms (5) abgeschrägt sind, der sich an der Seite der Trageplatte befindet.

9. Verbindung nach Anspruch 8, wobei die Seitenflächen des Lagerarms über ungefähr 1/3 - 1/2 der Höhe des Lagerarms abgeschrägt sind.

## Revendications

1. Connexion entre une poutre d'essieu (1) d'un essieu de roue d'un véhicule et un bras de support (5) de l'essieu de roue s'étendant dans la direction longitudinale du véhicule et recoupant la poutre d'essieu sensiblement perpendiculairement, ladite connexion comportant :
premièrement, un bloc intermédiaire (coussin d'essieu) (11 ; 41) agencé entre la poutre d'essieu (1) et le bras de support (5), lequel bloc intermédiaire (11 ; 41) est muni d'un évidement (12) dans lequel la poutre d'essieu est en appui (1), et
deuxièmement des moyens de connexion qui comportent :
(a) au moins une plaque de support (13 ; 14 ; 42) et
(b) des éléments de serrage du type boulon fileté (15, 16, 18 ; 43, 46, 47), qui s'étendent de chaque côté du bras de support (5) et de la poutre d'essieu (1), et des trous traversants qui sont percés à travers la plaque de support (13 ; 14), lesquels moyens de connexion connectent le bras de support (5), le bloc intermédiaire (11 ; 41) et la poutre d'essieu (1) de manière immobile les uns par rapport aux autres, **caractérisée en ce que** les moyens de connexion sont munis de parties de serrage (22, 23) situées de chaque côté à proximité du bras de support (5), chaque partie de serrage (22, 23) interagissant d'une manière serrée avec au moins une partie d'une face latérale du bras de support (5) et au moins une partie d'une face latérale du bloc intermédiaire (11 ; 41).

2. Connexion selon la revendication 1, dans laquelle la plaque de support (13 ; 14) est agencée sur le bras de support (5) sur le côté du bras de support dirigé à l'opposé de la poutre d'essieu (1), et est munie de parties (22, 23) faisant saillie au-delà du bras de support de chaque côté, lesquelles parties faisant saillie sont conçues comme les parties de serrage situées de chaque côté à proximité du bras de support, chaque partie de serrage (22 ; 23) interagissant d'une manière serrée avec le bras de support (5) au moins sur une partie d'une face latérale du bras de support qui est située sur le côté de la plaque de support, et chaque partie de serrage (22, 23) au niveau de l'extrémité libre étant en appui d'une manière serrée sur une face latérale du bloc intermédiaire (11).

3. Connexion selon la revendication 2, dans laquelle la partie de la plaque de support (13 ; 14) située entre les parties de serrage est au moins partiellement légèrement déformable.

4. Connexion selon la revendication 2 ou 3, dans laquelle la connexion comporte deux plaques de support (13 ; 14) situées dans la direction longitudinale du bras de support (5) de chaque côté de la poutre d'essieu (1), chaque plaque de support (13 ; 14) étant munie de deux parties de serrage (22, 23) s'étendant de chaque côté à proximité du bras de support (5).

5. Connexion selon la revendication 2 ou 3, dans laquelle la connexion comporte une plaque de support qui est munie de quatre parties de serrage situées dans la direction longitudinale du bras de support (5) par paires de chaque côté de la poutre d'essieu (1), et s'étendant par paires de chaque côté du bras de support (5).

6. Connexion selon l'une quelconque des revendications 2 à 5, dans laquelle les éléments de serrage sont constitués de deux étriers sensiblement en forme de U (15, 16) qui sont agencés autour de la poutre d'essieu (1) de chaque côté du bras de support (5), et dont les parties d'extrémité libre (17) sont munies de filet et s'étendent à travers des alésages qui sont percés à travers les parties de serrage de la ou des plaques de support, des écrous (18) étant vissés sur les parties des parties d'extrémité libre des étriers faisant saillie au-delà de la ou des plaques de support (13, 14), lesquels écrous appuient sur des faces de support (25, 26) sur le côté des parties de serrage dirigé à l'opposé de la poutre d'essieu, lesquelles faces de support sont situées à un niveau qui est tel que les parties d'extrémité libre ayant les écrous des étriers sont situées dans la direction verticale en dessous du niveau du côté supérieur de la ou des plaques de support.

7. Connexion selon la revendication 1, dans laquelle la plaque de support (42) est agencée sur le côté de la poutre d'essieu (1) dirigé à l'opposé du bras de support (5), et les éléments de serrage sont constitués de deux étriers sensiblement en forme de U (43), qui sont agencés autour du bras de support de chaque côté de la poutre d'essieu, et dont les parties d'extrémité libre (44, 45) sont munies d'un filet et s'étendent à travers les alésages qui sont percés à travers la plaque de support (42), des écrous (46 ; 47) étant vissés sur les parties des parties d'extrémité libre des étriers faisant saillie au-delà de la plaque de support, lesquels écrous appuient sur des faces du support sur le côté de la plaque de support dirigé à l'opposé de la poutre d'essieu, et les pattes des étriers en forme de U étant conçues comme les parties de serrage situées de chaque côté du bras de support.

8. Connexion selon l'une quelconque des revendications 1 à 6, dans laquelle les faces latérales du bras de support sont biseautées au moins sur une partie de la hauteur du bras de support (5) située sur le côté de la plaque de support.

9. Connexion selon la revendication 8, dans laquelle les faces latérales du bras de support sont biseautées sur approximativement un tiers à la moitié de la hauteur du bras de support.
